# EUROPEAN PATENT APPLICATION

(11) **EP 4 478 147 A1**
(43) Date of publication of application: **18.12.2024**
(21) Application number: 23179788.7
(22) Date of filing: 16.06.2023
(51) Int. Cl.: G05D 23/19, F24F 11/00

(54) **THERMOSTAT**

(71) Applicant: Cleveron AG, 3014 Bern (CH)
(72) Inventor: GAGLIARDI, Pietro, 6648 Minusio (CH); BISCHOF, Swen, 3270 Aarberg (CH)
(74) Representative: M. Zardi & Co S.A.

(57) **Abstract**

A smart thermostat is described including
- a temperature sensor (St) for a room in which the thermostat is to be installed;
- control means (R) intended to be operationally associated with a heating radiator located in the room, so that the heating radiator is enabled to supply heat and increase the temperature in the room or is disabled to stop the supply of heat;
- a microprocessor (µ) configured to determine whether to enable or disable the control means (R) on the basis of multiple input parameters (par), said multiple parameters including the temperature measured by the temperature sensor (Sₜ),
characterised in that it includes
- a measuring means (S_{Q}) for the carbon dioxide concentration (Q_{c}) in the room and in that
- the microprocessor (µ) is configured to determine a value (1, 0), representative of a presence or absence of people in the room, and is configured to include the value 1 or 0 among the multiple input parameters (par) useful in determining whether to enable or disable the control means (R),
said value being determined on the basis of the carbon dioxide concentration (Q_{c}) measured by the measuring means (S_{q}).

## Description

### Field of the invention:

The present invention relates to a thermostat for the autonomous monitoring and control of temperature in a room.

In particular, the invention relates to a thermostat of the above type including a temperature sensor, control means intended to be operationally associated with a heating radiator, and a microprocessor configured to determine whether to enable or disable the control means, on the basis of multiple input parameters, including the temperature measured by the sensor.

### Background of the invention

"Smart thermostats" are known, these being electronic devices that can be used on a heating radiator to reduce the delivery of heat in predetermined or estimated time slots in order to preheat a room that is still empty, i.e. unoccupied by people, in anticipation of people coming in, or to let the environment cool down if it is not expected to be occupied.

Such thermostats are valued because they set the environment to a comfortable temperature, but without disproportionately affecting costs, since they do not operate the heating means (radiator or others) for periods of time when the rooms are empty. The use of smart thermostats is increasingly valued for environmental reasons, as they can significantly reduce the emission of carbon dioxide (CO₂) and pollution caused by the unnecessary operation of heating.

Various thermostats of the above type are known which are equipped with a direct (satellite connection card) or indirect (connection card to a local network connected to the internet) connection to a remote device that enables its remote control, with a microprocessor, and with a temperature measurement sensor locally, where the thermostat is installed. The user can control the thermostat through an app or portal, enable or disable the heating means, program a timer or a preferred temperature for a room, or access any function that is normally available locally on the thermostat.

The level of autonomy of thermostats of the type mentioned above has been increased with the configuration of programs that enable or disable the heating means according to a goal to be achieved, such as the desired temperature, thus not (only) on the basis of preset parameters but (also) on the basis of parameters calculated or estimated by the thermostat's microprocessor itself.

In this context, the microprocessor can make use of predictive algorithms to estimate the time a person will enter the room, taking account of historical occupancy data. One known thermostat uses an acoustic sensor as an occupancy sensor: the microprocessor associates the noises detected by the sensor with the presence of people. For example, if no noise is perceived in a time slot when the radiator was scheduled to be operated, then the microprocessor may decide to discontinue delivery of heat from the radiator.

Although useful and advantageous, known thermostats suffer from some disadvantages.

Primarily, they are equipped with a battery so they can be installed without wiring and where electrical outlets are not available. However, battery life is very limited due to the sensor's high power consumption. The occupancy sensor, in particular, is very energy-intensive because it requires virtually continuous recording of noise, for constant input to a microphone. Some systems try to reduce consumption by alternating microphone off phases with on phases, but this can be counterproductive. This is because it may be that there is no noise during the on phase, despite the presence of people in the room who generate noise during the off phase, when the sensor is not active. Thus, errors are introduced into the process of temperature control by the microprocessor, which can, for example, allow cooling even in the presence of people.

The technical problem underlying the present invention is that of providing a thermostat that is capable of effectively controlling temperature, taking account of multiple parameters, including the presence or absence of people in the room to be heated, without, however, involving significant energy consumption, that is, maximising the life of a thermostat power supply battery, and at the same time achieving accurate and reliable detection of the presence or absence of people in the room to be heated.

### Summary of the invention

The idea behind the present invention is to provide a thermostat equipped with a monitoring means that can determine the presence or absence of people on the basis of the carbon dioxide concentration in a room to be heated.

Advantageously, the measurement takes very little time, simply involving enabling a carbon dioxide sensor (CO₂).

Advantageously, the carbon dioxide concentration in a room to be heated increases gradually in the presence of people if the room is closed (i.e. when windows or other openings to the outside environment are closed). Thus, if carbon dioxide concentration measurements are made at predetermined time intervals Δtx, Δty, i.e. by making use of the sensor for an instant of time during a standby interval Δtx, Δty during which the sensor is inactive, there is no risk of making the measurement at an insignificant or misleading instant, as is the case with prior art acoustic sensors. Conversely, the air in the room without recirculation with the outside environment (closed windows) acts as a capacitor or information memory, since a high concentration, i.e. above a certain threshold, reveals the presence of people in the past, thus during the standby interval Δtx, Δty. Thus, the concentration value read at the instant of measurement is also meaningful for what happened in the past (presence/absence of people).

Moreover, the reduction in concentration in the closed room is slow. Thus, if a person leaves and re-enters the room once or more, while still occupying the room overall for a certain period of time, the carbon dioxide concentration will still be sufficient (above a certain threshold) to infer that the room is occupied, and therefore needs to be heated sufficiently.

However, the applicant has considered that abrupt changes in the measured carbon dioxide concentration values can occur, caused by strong recirculation, normally when a window (multiple windows) is/are open to the outside environment, allowing fresh air to enter the room. It has therefore been provided that the thermostat of the present invention, again on the basis of the measured carbon dioxide concentration values, should determine whether the windows have been open to the outside before the instant of measurement, and take account of such opening when determining occupancy.

For this purpose, the thermostat includes a memory that stores some predetermined values W, L, briefly described below.

A value W represents a minimum average value (W) of the carbon dioxide concentration (Q_{IC}) in a room over a time interval, if the room were closed, starting from a certain value of carbon dioxide concentration, measured at the beginning of the interval. This is because, in a closed room for public use, i.e. a room with at least one opening to the outside, such as a window, a ventilated condition prevails even if the window is closed. In other words, the carbon dioxide concentration does not exceed a certain limit because there is still recirculation of air between the room and the outside environment. The closed room, not being airtight, is in fact in communication with the outside. However, although there is this microcirculation, the carbon dioxide concentration in the time interval is not normally less than the minimum average value W. The carbon dioxide concentration is less than the minimum average value W in the time interval only if the room is ventilated, such as with an open window that allows air to enter from outside. Even more specifically, starting from a certain carbon dioxide concentration (caused, for example, by the previous presence of people in the room), concentration tends to decrease in a closed room according to a function Wc. The function Wc is continuous, i.e. it decreases at each instant of measurement. The value W is the average value calculated over the time interval. The continuous function Wc is provided as input to the microprocessor as representative of the rate of decrease in carbon dioxide concentration in a closed environment (room) without people, and the average value W calculated by the processor, taking account of the function Wc over an interval of interest Δtx, Δty, with respect to which opening or closure of the windows is to be checked.

This minimum average value (W) is compared with the average carbon dioxide concentration over two successive intervals. The successive intervals can be the standby intervals Δtx, Δty. The average carbon dioxide concentration for each interval can be calculated by detecting the carbon dioxide value at the beginning and at the end of the interval and averaging the two values over the length of the interval. The sensor is thus operated only at the beginning and the end of the interval.

Comparison of the minimum average value (W) with the average carbon dioxide concentration in the two successive intervals is used to determine whether a window has been opened during one of the standby intervals or in both intervals. The purpose of this check is to adapt the determination of the presence of people in the room, at a time subsequent to the second interval (or corresponding to the end of the second interval), also denoted occupancy determination time, on the basis of the windows possibly having been opened.

The term window/windows is used in non-limiting manner, i.e. it also means other openings, such as doors, that allow rapid recirculation of air, and thus of carbon dioxide concentration, that would not otherwise occur.

Another predetermined value (L) is representative of the carbon dioxide concentration in a closed room in the absence of people. This value is compared with the value of carbon dioxide concentration at the occupancy determination time, the latter being considered significant for determining the presence of people in the room at the time of occupancy determination, in the case of closed windows in the time interval Δty immediately preceding the time of occupancy determination.

If, on the other hand, the windows have been opened in the time interval Δty immediately preceding the occupancy determination time, a previous carbon dioxide concentration value detected in another time interval Δtx, earlier than Δty, is taken into account as a significant value for determining the presence of people.

Advantageously, detection is carried out by operating the sensor at the standby intervals. In addition, the length of standby intervals can be adjusted dynamically. For example, given the presence of people in the room in the interval Δty preceding the occupancy determination time, the length of subsequently set standby intervals can be reduced (or left unchanged). Conversely, given the absence of people in the room in the interval Δty preceding the occupancy determination time, the length of subsequently set standby intervals can be increased, so concomitantly increasing the thermostat's battery life (since power consumption is reduced).

Further features of the thermostat according to the present invention will be apparent from an embodiment provided solely for non-limiting, illustrative purposes with regard to the appended figures.

### Brief description of the appended figures

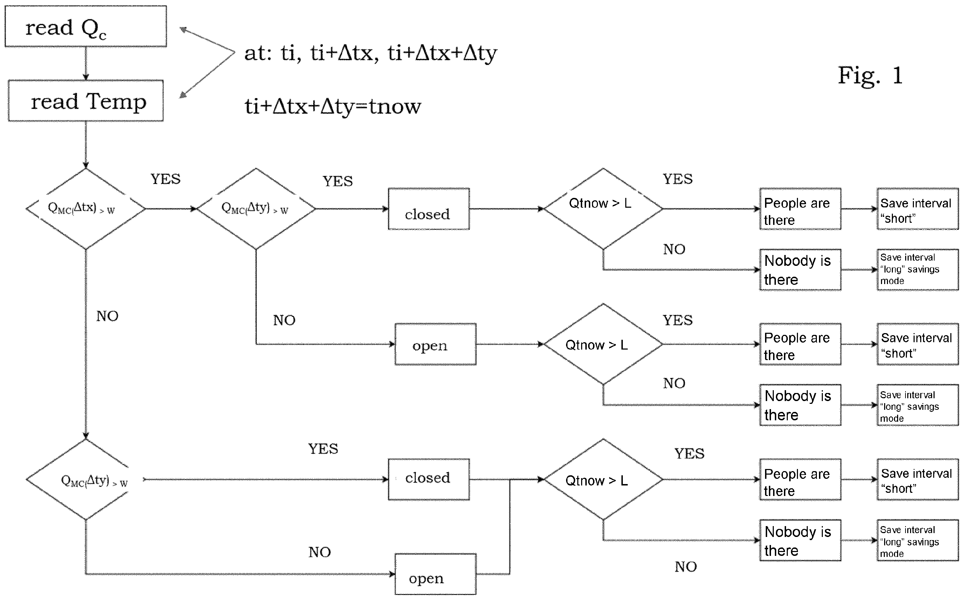

Figure 1 is a representative flow chart of a temperature monitoring method implemented by a thermostat according to the present invention.
Figures 2 to 7 are representative graphs of monitoring of window opening in a room at two different time intervals and monitoring of the presence of people in the room, subsequent to the two intervals, performed by the thermostat of the present invention.

### Detailed description of the invention

A thermostat according to the present invention is described below with reference to the appended figures.

For example, the purpose of the thermostat is to control a valve fitted to a heating radiator or generally to heating means located in a room. For example, the radiator (heating means) is installed such that it cannot be removed from the room, since it is, for example, connected to hot water supply pipes which converge at a boiler. The thermostat, on the other hand, is an electrical device intended to be installed on the radiator and to drive the radiator valve, so reducing the radiation of heat. Reduction is effected by taking account of multiple parameters, in particular the actual or expected presence of people in the room and the desired temperature.

The thermostat includes:
- a temperature sensor St for the room in which it is to be installed;
- control means R intended to be operationally associated with a heating radiator located in the room, and in particular with the radiator valve, so that the heating radiator is enabled to supply heat and increase the temperature in the room or is disabled to stop the supply of heat;
- a microprocessor µ configured to determine whether to enable or disable the control means R on the basis of multiple input parameters par.

As stated above, the control means R are intended to be operationally associated with a heating radiator located in the room. This is, for example, the case when the thermostat is fitted directly to the radiator to drive a valve for opening or closure of water flow through the radiator.

However, there is nothing to prevent the control means R from being intended to be operationally associated with the heating radiator located in the room but without the thermostat being directly fitted to the radiator. For example, the thermostat can be mounted on the wall, in the room, and the control means R are only electrically connected to a thermostatic radiator valve to control the opening or closure of water flow through the radiator.

Furthermore, the phrase "control means operatively associated with a radiator" should not be read in limiting terms with respect to a "one-to-one" association between the thermostat and the radiator. For example, the thermostat can be mounted on the wall, in the room, and the control means R are electrically connected to multiple radiators to control the opening or closure of water flow through the radiator.

Finally, although the term "radiator" is adopted below, there is nothing to prevent the use of a different heating system in association with the thermostat, such as a heating system in the form of a coil or any other radiant surface. The multiple input parameters include the temperature measured by the temperature sensor St. Multiple other input parameters can be taken into account, including parameters related to weather and/or expected temperatures, or room usage patterns, such as the expected presence or absence of people, to name but a few. These parameters can be provided as an input to the thermostat or be estimated by the microprocessor. In particular, the thermostat can acquire information from a memory in an input peripheral, such as a keypad built into the thermostat, a touch or voice interface; information can also be acquired from a communication card interfaced with a remote monitoring system and connected to the internet. Among said multiple input parameters, the thermostat also takes account of a value representative of the presence or absence of a person in the room. This value is determined by the thermostat as specified below in one embodiment.

The thermostat includes a measuring means S_{Q} for the carbon dioxide concentration Q_{c} in the room. The measuring means outputs a value Qc representative of the parts per million (ppm) of carbon dioxide in an air sample acquired in the room.

The microprocessor (µ) is configured to determine a value, 1 or 0, representative of a presence or absence of people in the room, and is configured to include the value 1 or 0 among the multiple input parameters par useful in determining whether to enable or disable the control means R.

According to the present invention, the representative value of presence or absence is determined on the basis of the carbon dioxide concentration Q_{c} measured by the measuring means S_{q}.

Since the room may have been ventilated before the microprocessor determines the representative value, the carbon dioxide concentration Q_{c} is also evaluated in at least two time intervals prior to the determination. In other words, the microprocessor µ is configured to determine whether the room has been ventilated by opening (for example of a window) to the outside environment before determining the value 1, 0 representative of the presence or absence of people in the room.

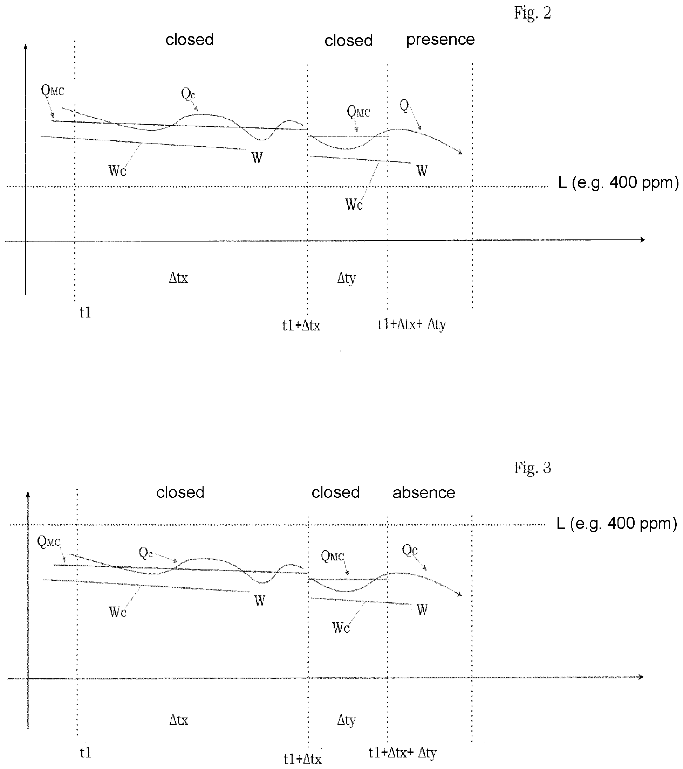

Figures 2 to 7 are representative graphs of the calculations made by the microprocessor for occupancy determination. Some calculations preparatory to the determination of whether the windows have been opened, carried out before the room occupancy determination, are first described.

Account is taken of two intervals Δtx, Δty before the occupancy determination, which is carried out, for example, at time t1+Δtx+Δty.

In Figure 2 (and the other figures), t1, t1+Δtx and t1+Δtx+Δty are three instants of time at which the carbon dioxide concentration Q_{c} is measured. The measuring means can be in a state of very low power consumption or turned off during time intervals Δtx, Δty. It is enabled only at time t1, t1+Δtx and t1+Δtx+Δty, and strictly for the time required for measuring carbon dioxide concentration Qc. The time required for carbon dioxide measurement is much shorter than the duration of the intervals Δtx, Δty. In the remainder of the description, the quantities of carbon dioxide are respectively denoted Q_{c(ti)}, Q_{c(ti+Δtx)} and Q_{c(ti+Δtx+Δty)}. The figures take account of the value i= 1 and therefore concentrations Q_{c(t1)}, Q_{c(t1+Δtx)} and Q_{c(t1+Δtx+Δty)} are calculated only at said instants t1, t1+Δtx and t1+Δtx+Δty.

The microprocessor µ is configured to determine whether the room has been ventilated by opening to the outside environment on the basis of the measured concentrations Q_{c(ti)}, Q_{c(ti+Δtx)} and Q_{c(ti+Δtx+Δty)}. In Figures 2 to 7, concentration values are generically denoted Qc where Qc is a continuous function over time.

In particular, a reading is taken of a first carbon dioxide concentration Q_{c(ti)}, e.g. i=1, measured by the measuring means S_{q} at a first time ti (t1).

Next, a reading is taken of a second carbon dioxide concentration Q_{c(ti+Δtx)} measured by the measuring means S_{q} at a time ti+Δtx, subsequent to time ti by a time interval Δtx (t1+Δtx) .

The measurement is made to read a third carbon dioxide concentration Q_{c(ti+Δtx+Δty)} at a time ti+Δtx+Δty, subsequent to time ti+Δtx by a time interval Δty (thus t1+Δtx+Δty).

An average concentration value per interval is then determined on the basis of the concentration readings which have been made. The example is given here with only two values per interval but it is possible to take more than two readings per interval Δtx, Δty. In particular, the following are carried out:
- determination of a first average value Q_{MCx} of the carbon dioxide concentration in the room in the time interval Δtx;
- determination of a second average value Q_{MCy} of the carbon dioxide concentration in the room in the time interval Δty. In Figures 2 to 7, concentration values are generically denoted Q_{MC}.

Finally, a comparison of the first average value Q_{MCx} in the time interval Δtx and the second average value Q_{MCy} in the time interval Δty with a minimum average value W is made to determine whether the window has been opened.

The minimum average value W is representative of a minimum carbon dioxide concentration Q_{IC} in the room over a time interval, starting from a certain carbon dioxide concentration value, measured at the beginning of the interval Δtx, if the room were closed during the interval. In practice, starting from a certain carbon dioxide concentration, e.g. measured at time t1 and caused by the previous presence of people in the room, the concentration tends to decrease in a closed room according to a function Wc. The carbon dioxide concentration in the time interval is not normally less than the minimum average value W (average value of the function Wc in the interval). The carbon dioxide concentration is less than the minimum average value W in the time interval only if the room is ventilated, such as with an open window that allows air to enter from outside. The graphs in Figures 2 to 7 are only representative of the process, and in particular are intended to highlight the advantage of enabling the measuring means only for the bare minimum (at time t1, t1+Δtx, and t1+Δtx+Δty) even though the carbon dioxide concentration Q_{c} varies continuously over time (thus also over intervals Δtx, Δty). The graph of the average and minimum average value W concentrations is also purely illustrative. The function Wc is continuous, i.e. it decreases at each instant of measurement. The value W is the average value calculated over the time interval. The continuous function Wc is provided as input to the microprocessor as representative of the rate of decrease in carbon dioxide concentration in a closed environment (room) without people, and the average value W calculated by the processor, taking account of the function Wc over an interval of interest Δtx, Δty, with respect to which opening or closure of the windows is to be checked.

Operationally, the microprocessor can be configured to determine the first average value Q_{MCx} and the second average value Q_{MCy} through, respectively, a first and second ratio of a carbon dioxide concentration difference to a time difference, thus taking account of the time intervals Δtx and Δty.

The first ratio is between the difference of the second concentration (Q_{c(ti+Δtx)}) and the first concentration (Q_{c(ti)}) of carbon dioxide (numerator), in the interval Δtx (t1+ Δty - t1), to the denominator, thus Q_{MCx} = [(Q_{c(ti+Δtx)}) - (Q_{c(ti)})] / Δtx.

The second ratio is between the difference of the third concentration (Q_{c(ti+ Δtx+Δty)}) and the second concentration (Q_{c(ti+ Δtx)}) of carbon dioxide, in the interval Δty, thus Q_{MCy} = [Q_{c(ti+ Δtx+Δty)} - Q_{c(ti+ Δtx)}] / Δty.

Once the average value has been established, the (representative) value of ventilation by opening to the outside environment is determined as follows.

The value can assume four different values (e.g. 00, 11, 10, 01) which are representative of opening the window in both intervals (11); closing in both intervals (00); opening only in the most distant interval (10); opening only in the most recent interval (01).

More specifically, the ventilation value is set:
to a first value (00) if the first average value Q_{MCx} and the second average value Q_{MCy} are both greater than the minimum average value W. This is the situation depicted in Figure 2, in which the first value is associated with closure to the outside environment in both the first time interval Δtx and the second time interval Δty because the average carbon dioxide concentration was greater than the minimum closed-environment concentration in both the first interval and the second interval. This could not happen if in either or both intervals the average concentration were less than the minimum average concentration W (because this would mean that a window had been opened). The average value W represents the minimum average value W of carbon dioxide concentration (Q_{IC}) in the closed room. Therefore, since the minimum average value W is less than the average values Q_{MCx} and Q_{MCy} in both measurements, the assumption is made that the windows have not been opened in either of the two intervals (otherwise at least one of the average values Q_{MCx} and Q_{MCy} might have been lower than the minimum value).

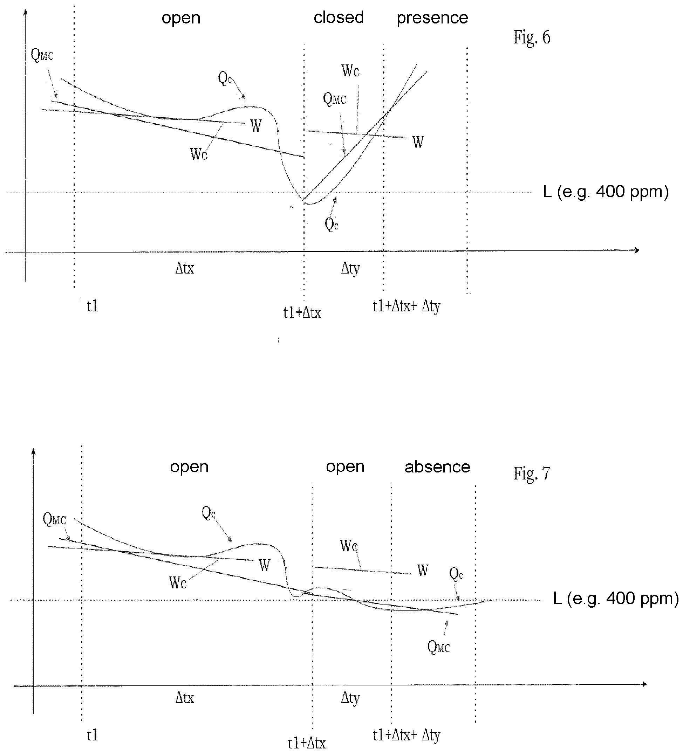

The ventilation value is set:
to a second value (11) if the first average value Q_{MCx} and the second average value Q_{MCy} are both less than the minimum average value W. The second value is therefore associated with opening to the outside environment in both the first time interval Δtx and the second time interval Δty. The situation is depicted in Figure 7. In this case, since the minimum average value W is greater than the average values Q_{MCx} and Q_{MCy} in both measurements, the assumption is made that the windows have been opened in both intervals (otherwise at least one of the average values Q_{MCx} and Q_{MCy} might have been greater than the minimum value).

The ventilation value is set:
to a third value (10) if the first average value (Q_{MCx}) is less than the minimum average value (W), and if the second average value (Q_{MCy}) is greater than the minimum average value (W). The third value is associated with opening to the outside environment in the first time interval Δtx, and closure to the outside environment in the second time interval Δty. The situation is depicted in Figure 6. In this case, since the minimum average value W is less than the average value Q_{MCx} but not than the average value Q_{MCy}, the assumption is made that windows have been opened in interval Δtx but not in interval Δty.

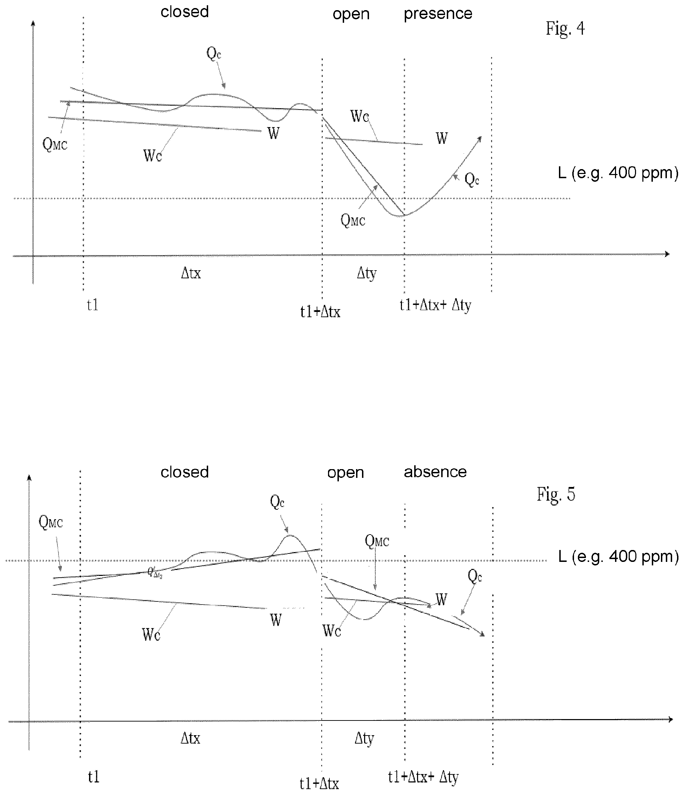

The ventilation value is set:
to a fourth value (01) if the first average value (Q_{MCx}) is greater than the minimum average value (W), and if the second average value (Q_{MCy}) is less than the minimum average value (W). The fourth value is associated with opening to the outside environment in the second time interval Δty, and closure to the outside environment in the first time interval Δtx. The situation is depicted in Figures 4 and 5.

Once the assessment regarding possible opening of the windows is complete, possible occupancy is determined.

A value L representative of the carbon dioxide concentration in a closed room in the absence of people is taken into account. The value L is stored in the thermostat, and the microprocessor (µ) is configured to determine the value 1 or 0 representative of the presence or absence of people in the room at time ti+Δtx+Δty, also taking account of the value L.

Specifically, the microprocessor (µ) is configured to set the value 1 or 0 representative of the presence or absence of people in the room to a value of presence 1 in the following cases, A, B, C.
A) The value representative of ventilation by opening to the outside environment is set to the first value (00, i.e., windows closed in both intervals), and the value of the third carbon dioxide concentration (Q_{c(ti+Δtx+Δty)}) measured by the measuring means (S_{q}) at time ti+Δtx+Δty is greater than the value (L) representative of carbon dioxide concentration in the absence of people; since the value of the third carbon dioxide concentration (Q_{c(ti+Δtx+Δty)}) is greater than the reference value L, it is in fact assumed that the carbon dioxide concentration is caused by the presence of people (Figure 2).
B) The value representative of said ventilation by opening to the outside environment is set to the fourth value (01, closure only in the most distant time interval Δtx), and the value of the third carbon dioxide concentration (Q_{c(ti+Δtx+Δty)}) measured by the measuring means (S_{q}) at time ti+Δtx+Δty is less than the value (L) representative of carbon dioxide concentration; in this case, since the value of the third carbon dioxide concentration (Q_{c(ti+Δtx+Δty)}) is less than the reference value L but, in the closest interval Δty a window has been opened, the microprocessor does not take account of the value of the third carbon dioxide concentration (Q_{c(ti+Δtx+Δty)}) for the occupancy determination but, instead, of the previously measured value (Q_{c(ti+Δtx)}). Since the previously measured value (Q_{c(ti+Δtx)}) is greater than the reference value L, it is in fact assumed that the carbon dioxide concentration was caused at time (_{ti+Δtx}) by the presence of people (Figure 4).
C) The value representative of said ventilation by opening to the outside environment is set to the third value (10, i.e. closure only in the closest time interval Δty), and the value of the third carbon dioxide concentration (Q_{c(ti+Δtx+Δty)}) measured by the measuring means (S_{q}) at time ti+Δtx+Δty is greater than the value (L) representative of carbon dioxide concentration. In this case too, since the value of the third carbon dioxide concentration (Q_{c(ti+Δtx+Δty)}) is greater than the reference value L, it is in fact assumed that the carbon dioxide concentration is caused by the presence of people (Figure 6).

These situations A-C are depicted in the graphs in Figures 2, 4 and 6.

In contrast, the microprocessor (µ) is configured to set the value 1 or 0 representative of the presence or absence of people in the room to a value of absence 0 in the following cases D, E and F.
D) The value representative of said ventilation by opening to the outside environment is set to the first value (00, i.e. closure in Δtx and Δty), and the value of the third carbon dioxide concentration (Q_{c(ti+Δtx+Δty)}) measured by the measuring means (S_{q}) at time ti+Δtx+Δty is less than or equal to the value (L) representative of carbon dioxide concentration; in this case, since the value of the third carbon dioxide concentration (Q_{c(ti+Δtx+Δty)}) is less than the reference value L, it is in fact assumed that such a low carbon dioxide concentration is caused by the absence of people (Figure 3).
E) The value representative of said ventilation by opening to the outside environment is set to the fourth value (01, closure only in the most distant time interval Δtx), and the value of the third carbon dioxide concentration (Q_{c(ti+Δtx+Δty)}) measured by the measuring means (S_{q}) at time ti+Δtx+Δty is less than the value (L) representative of carbon dioxide concentration; in this case, since the value of the third carbon dioxide concentration (Q_{c(ti+Δtx+Δty)}) is less than the reference value L but, in the closest interval Δty a window has been opened, the microprocessor does not take account of the value of the third carbon dioxide concentration (Q_{c(ti+Δtx+Δty)}) for the occupancy determination but, instead, of the previously measured value (Q_{c(ti+Δtx)}). Since the previously measured value (Q_{c(ti+Δtx)}) is less than the reference value L, it is in fact assumed that the carbon dioxide concentration was caused at time (_{ti+Δtx}) by the absence of people (Figure 5).
F) The value representative of said ventilation by opening to the outside environment is set to the second value (11, windows always open), and the value of the third carbon dioxide concentration (Q_{c(ti+Δtx+Δty)}) measured by the measuring means (S_{q}) at time ti+Δtx+Δty is less than the value (L) representative of carbon dioxide concentration (Figure 7).

These situations D-F are depicted in the graphs in Figures 3, 5 and 7.

Advantageously, as mentioned above, the power consumption of an on-board thermostat battery is low because the readings are taken by the measuring means at standby intervals and are of short duration. Consumption can be further reduced by prolonging the duration of the standby intervals.

In particular, if the difference in carbon dioxide concentration between the second measured carbon dioxide concentration (Q_{c(ti+Δtx)}) and the first measured carbon dioxide concentration (Q_{c(ti)}) is negative or less than a preset value (δ_{preWIN}), the time interval Δtx is reduced by a predetermined time concentration ti. This adjustment is made because a decrease in concentration may be associated with the absence of people and thus the possibility of reducing the granularity of monitoring. In other words, knowing that the room is empty, the interval before which additional carbon dioxide measurement monitoring is carried out is extended. The extension is by a time tᵣ.

Conversely, knowing that the room is not empty, the interval before which additional carbon dioxide measurement monitoring is carried out may be reduced so as to increase the granularity (frequency) of monitoring. This strategy makes it possible to refine monitoring and make the environment more comfortable in the presence of people. The reduction may be by time tᵣ.

Thus, the time interval Δtx reduced by the predetermined time tᵣ is restored to the duration prior to said reduction if the difference in carbon dioxide concentration between the second concentration (Q_{c(ti+Δtx)}) and the first concentration (Q_{c(ti)}) of carbon dioxide is greater than the preset value (δ_{preWIN}).

Purely indicatively, the time interval Δtx can set to 60 minutes and said predetermined time t₁ᵣ is set to 45 minutes, such that the time interval Δtx can be reduced to 15 minutes.

Advantageously, the microprocessor (µ) is configured to operate in a low-power (or off) mode during the time interval Δtx, Δty and to be enabled for a time interval Δtz, preferably from 1 to 10 milliseconds, useful for determining whether to enable or disable the control means (R).

Preferably, as mentioned above, the thermostat also includes a two-way transceiver for remote connection to a server. The multiple input parameters may include parameters sent remotely from the server. The multiple input parameters include a target temperature value (T_{target}) to be maintained in the room. The target temperature value (T_{target}) can be varied according to time slots. The target temperature value (T_{target}) can be calculated by a predictive algorithm in the processor or on the remote server. A memory M of the thermostat stores the multiple input parameters, in particular the parameters stored locally in the thermostat. An accelerometer (for tamper monitoring), a humidity sensor, and an interface, preferably LED or touch, can be provided. The accelerometer is configured to communicate with the microprocessor, and the microprocessor is configured to detect thermostat tampering on the basis of the accelerometer data.

## Claims

1. A smart thermostat including
- a temperature sensor (St) for a room in which the thermostat is to be installed;
- control means (R) intended to be operationally associated with a heating radiator located in the room, so that the heating radiator is enabled to supply heat and increase the temperature in the room or is disabled to stop the supply of heat;
- a microprocessor (µ) configured to determine whether to enable or disable the control means (R) on the basis of multiple input parameters (par), said multiple input parameters including the temperature measured by the temperature sensor (St),
**characterised in that** it includes
- a measuring means (S_{Q}) for the carbon dioxide concentration (Q_{c}) in the room and **in that**
- the microprocessor (µ) is configured to determine a value (1, 0), representative of a presence or absence of people in the room, and is configured to include the determined value (1, 0) among the multiple input parameters useful in determining whether to enable or disable the control means (R),
said value being determined on the basis of the carbon dioxide concentration (Q_{c}) measured by the measuring means (S_{q}).

2. A smart thermostat according to claim 1, **characterised in that** the microprocessor (µ) is configured to determine whether the room has been ventilated by opening to the outside environment before determining the value (1, 0) representative of the presence or absence of people in the room.

3. A smart thermostat according to claim 2, **characterised in that** the microprocessor (µ) is configured to determine whether the room has been ventilated by opening to the outside environment by:
- reading a first carbon dioxide concentration (Q_{c(ti}) measured by the measuring means (S_{q}) at a first time ti;
- reading a second carbon dioxide concentration (Q_{c(ti+Δtx)}) measured by the measuring means (S_{q}) at a time ti+Δtx, subsequent to time ti by a time interval Δtx;
- reading a third carbon dioxide concentration (Q_{c(ti+Δtx+Δty)}) measured by the measuring means (S_{q}) at a time ti+Δtx+Δty, subsequent to time ti+Atx by a time interval Δty;
- determining a first average value (Q_{MCx}) of carbon dioxide concentration in the room in the time interval Δtx;
- determining a second average value (Q_{MCy}) of carbon dioxide concentration in the room in the time interval Δty;
- comparing the first average value (Q_{MCx}) in the time interval Δtx and the second average value (Q_{MCy}) in the time interval Δty with a minimum average value (W) representative of an average carbon dioxide concentration (Q_{IC}) in the room in the time interval Δtx and Δty if the room were closed and under ideal ventilation conditions.

4. A smart thermostat according to claim 3, **characterised in that** the microprocessor is configured to determine the first average value (Q_{MCx}) and the second average value (Q_{MCy}) through, respectively, a first and second ratio of a carbon dioxide concentration difference with respect to the time intervals Δtx and Δty;
said first ratio being between the difference of the second concentration (Q_{c(ti+Δtx)}) and the first concentration (Q_{c(ti)}) of carbon dioxide with respect to the interval Δtx;
said second ratio being between the difference of the third concentration (Q_{c(ti+Δtx+Δty)}) and the second concentration (Q_{c(ti+Δtx)}) of carbon dioxide with respect to the interval Δty.

5. A smart thermostat according to claim 4, **characterised in that** the microprocessor is configured to set the value representative of said ventilation by opening to the outside environment:
- to a first value, if the first average value (Q_{MCx}) and the second average value (Q_{MCy}) are both greater than the minimum mean value (W), said first value being associated with closure to the outside environment in both the first time interval Δtx and the second time interval Δty;
- to a second value, if the first average value (Q_{MCx}) and the second average value (Q_{MCy}) are both less than the minimum mean value (W), said second value being associated with opening to the outside environment in both the first time interval Δtx and the second time interval Δty;
- to a third value, if the first average value (Q_{MCx}) is less than the minimum average value (W), and if the second average value (Q_{MCy}) is greater than the minimum average value (W), said third value being associated with opening to the outside environment in the first time interval Δtx and closure to the outside environment in the second time interval Δty;
- to a fourth value, if the first average value (Q_{MCx}) is greater than the minimum average value (W), and if the second average value (Q_{MCy}) is less than the minimum average value (W), said fourth value being associated with opening to the outside environment in the second time interval Δty and closure to the outside environment in the first time interval Δtx.

6. A smart thermostat according to claim 3, **characterised in that** a value (L) representative of the carbon dioxide concentration in a closed room in the absence of people is stored and the microprocessor (µ) is configured to determine the value (1, 0) representative of a presence or absence of people in the room at time ti+Δtx+Δty.

7. A smart thermostat according to claim 6, **characterised in that** the microprocessor (µ) is configured to set the value (1, 0) representative of the presence or absence of people in the room to a value of presence (1) if:
the value representative of said ventilation by opening to the outside environment is set to the first value and the value of the third carbon dioxide concentration (Q_{c(ti+Δtx+Δty)}) measured by the measuring means (S_{q}) at time ti+Δtx+Δty is greater than the value (L) representative of carbon dioxide concentration; or
the value representative of said ventilation by opening to the outside environment is set to the fourth value and the value of the third carbon dioxide concentration (Q_{c(ti+Δtx+Δty)}) measured by the measuring means (S_{q}) at time ti+Δtx+Δty is less than the value (L) representative of carbon dioxide concentration;
the value representative of said ventilation by opening to the outside environment is set to the third value and the value of the third carbon dioxide concentration (Q_{c(ti+Δtx+Δty)}) measured by the measuring means (S_{q}) at time ti+Δtx+Δty is greater than the value (L) representative of carbon dioxide concentration.

8. A smart thermostat according to claim 6, **characterised in that** the microprocessor (µ) is configured to set the value (1, 0) representative of the presence or absence of people in the room to a value of absence (0) if:
the value representative of said ventilation by opening to the outside environment is set to the first value and the value of the third carbon dioxide concentration (Q_{c(ti+Δtx+Δty)}) measured by the measuring means (S_{q}) at time ti+Δtx+Δty is less than or equal to the value (L) representative of carbon dioxide concentration; or
the value representative of said ventilation by opening to the outside environment is set to the fourth value and the value of the third carbon dioxide concentration (Q_{c(ti+Δtx+Δty)}) measured by the measuring means (S_{q}) at time ti+Δtx+Δty is less than the value (L) representative of carbon dioxide concentration;
the value representative of said ventilation by opening to the outside environment is set to the second value and the value of the third carbon dioxide concentration (Q_{c(ti+Δtx+Δty)}) measured by the measuring means (S_{q}) at time ti+Δtx+Δty is less than the value (L) representative of carbon dioxide concentration.

9. A smart thermostat according to claim 4, **characterised in that**, if the difference in carbon dioxide concentration between the second carbon dioxide concentration (Q_{c(ti+Δtx)}) and the first carbon dioxide concentration (Q_{c(ti)}) is negative or less than a preset value (δ_{preWIN}),
said time interval Δtx is reduced by a predetermined time tᵣ.

10. A smart thermostat according to claim 9, **characterised in that** the time interval Δtx reduced by the predetermined time tᵣ is restored to the duration prior to said reduction if the difference in carbon dioxide concentration between the second concentration (Q_{c(ti+Δtx)}) and the first concentration (Q_{c(ti)}) of carbon dioxide is greater than the preset value (δ_{preWIN}).

11. A smart thermostat according to claim 10, **characterised in that** said time interval Δtx is set to 60 minutes and said predetermined time tᵣ is set to 45 minutes, such that the time interval Δtx can be reduced to 15 minutes.

12. A smart thermostat according to claim 3, **characterised in that** the microprocessor (µ) is configured to operate in a low-power mode during the time interval Δtx and to be enabled for a time interval Δtz, preferably from 1 to 10 milliseconds, useful for determining whether to enable or disable the control means (R).

13. A smart thermostat according to claim 1, **characterised in that** it includes a two-way transceiver capable of remote connection to a server, said multiple input parameters including parameters sent remotely from the server.

14. A smart thermostat according to claim 1, **characterised in that** it includes a memory (M), said multiple input parameters including parameters stored locally in the memory (M).

15. A smart thermostat according to claim 1, **characterised in that** it includes an accelerometer, a humidity sensor, and an interface, preferably LED or touch, said accelerometer being configured to communicate with the microprocessor and the microprocessor being configured to detect thermostat tampering on the basis of the accelerometer data.
